## Europäisches Patentamt

## European Patent Office

## Office européen des brevets

(11) Veröffentlichungsnummer: **0 297 243**
**A2**

# (12) EUROPÄISCHE PATENTANMELDUNG

(21) Anmeldenummer: **88106714.4**

(22) Anmeldetag: **27.04.88**

(51) Int. Cl.4: **G01B 9/02**

Die Bezeichnung der Erfindung wurde geändert (Richtlinien für die Prüfung im EPA, A-III, 7.3).

(30) Priorität: **29.05.87 DE 3718192**

(43) Veröffentlichungstag der Anmeldung:
**04.01.89 Patentblatt 89/01**

(84) Benannte Vertragsstaaten:
**CH FR GB IT LI SE**

(71) Anmelder: **Hommelwerke GmbH
Alte Tuttlinger Strasse 20
D-7730 VS-Schwenningen(DE)**

(72) Erfinder: **Ulbers, Gerd, Dr.
Lindenbaumstrasse 10
D-7730 VS-Weilersbach(DE)**

(74) Vertreter: **Leine, Sigurd, Dipl.-Ing. et al
Dipl.-Ing. Sigurd Leine Dipl.-Phys. Dr.
Norbert König Patentanwälte
Burckhardtstrasse 1
D-3000 Hannover 1(DE)**

(54) **Vorrichtung zur Messung des Abstandes zwischen dieser Vorrichtung und einer Messfläche.**

(57) Vorrichtung zur Messung des Abstandes zwischen der Vorrichtung und einer Meßfläche, mit einem optischen Interferometer, das einen Meßwellenleiter (3) aufweist, dessen eines Ende mit einem Laser (2) verbunden und dessen anderes Ende auf einen auf der Meßfläche (7) angeordneten oder mit dieser wirkungsverbundenen optischen Meßreflektor (6) gerichtet ist, der das Licht in den Meßwellenleiter zurückwirft. Das Interferometer weist außerdem einen Bezugswellenleiter (11) auf, der mit dem Meßwellenleiter über eine Koppelstelle (10) gekoppelt ist, an seinem einen Ende einen Spiegel und an seinem anderen Ende einen lichtelektrischen Wandler aufweist, der mit einer Anzeigeeinrichtung zur Anzeige des elektrischen Ausgangssignals des lichtelektrischen Wandlers verbunden ist. Der Bezugswellenleiter ist über einen vorzugsweise polarisierenden Strahlteiler (9) mit einem Abzweigwellenleiter gekoppelt, dessen Ende mit einem weiteren lichtelektrischen Wandler verbunden ist. Der Bezugswellenleiter weist eine Phaseneinstelleinrichtung auf. Die Ausgänge der lichtelektrischen Wandler sind mit einem Differenzverstärker verbunden, dessen gleichspannungsfreies Ausgangssignal in die Anzeigeeinrichtung eingespeist ist. Durch die Gleichspannungsfreiheit des Ausgangssignals des Differenzverstärkers wird die Weiterverarbeitung des Interferenznutzsignals erleichtert und die Meßgenauigkeit erhöht.

FIG. 1

## Vorrichtung zur Messung des Abstandes zwischen der Vorrichtung und einer Meßfläche

Die Erfindung betrifft eine Vorrichtung der im Oberbegriff des Anspruchs 1 genannten Art zur Messung des Abstandes zwischen der Vorrichtung und einer Meßfläche.

Die deutsche Patentanmeldung P 36 30 887 beschreibt eine Vorrichtung der betreffenden Art. Das dabei verwendete Interferometer liefert am Ausgang der lichtelektrischen Wandler nicht nur ein Nutzsignal entsprechend der Interferenz zwischen dem Licht in dem Meß- und dem Bezugswellenleiter, sondern darüber hinaus ein Gleichspannungssignal, da der lichtelektrische Wandler ständig mit irgendeinem bestimmten Lichtpegel beleuchtet ist und naturgemäß keine negativen Spannungen abgeben kann. Dieses Gleichspannungssignal erschwert die Weiterverarbeitung beispielsweise in einem nachgeschalteten Zähler. Eine Ausfilterung des Gleichspannungssignals durch Kondensatoren ist nicht möglich, desgleichen eine Kompensation durch eine Kompensationsspannung, da die störende Gleichspannung schwankt, zumindest - schwanken kann.

Der Erfindung liegt die Aufgabe zugrunde, eine Vorrichtung der betreffenden Art zu schaffen, bei der ein der Interferenz entsprechendes Wechselspannungssignal ohne Gleichspannungsanteil zur Verfügung steht.

Die der Erfindung zugrundeliegende Aufgabe wird bei einer Einrichtung der betreffenden Art durch die im Kennzeichen des Anspruchs 1 oder durch die im Kennzeichen des Anspruchs 6 angegebenen Lehren nach dem gleichen Grundgedanken gelöst.

Dieser Grundgedanke besteht darin, von der gleichen Quelle her das an sich störende Gleichsignal ohne das Interferenzsignal noch einmal zu erzeugen und dann beide Signale entweder in einer spannungsmäßigen oder frequenzmäßigen Differenzschaltung so zu kombinieren, daß das Gleichsignal herausfällt und das Nutzsignal allein zur Verfügung steht. Die spannungsmäßige Ausführungsform ist in Anspruch 1 angegeben, während die frequenzmäßige Ausführungsform in Anspruch 6 enthalten ist.

Bei der spannungsmäßigen Ausführungsform kann die Phaseneinstelleinrichtung durch zwei Elektroden gebildet sein, die sich zu beiden Seiten des Abzweigleiters über einen Teil desselben erstrecken und an eine einstellbare Gleichspannung angeschlossen sind. Besonders zweckmäßig ist aber die Ausführungsform, bei der die Phaseneinstelleinrichtungen durch $\frac{\lambda}{4}$ Plättchen oder durch andere feste $\frac{\lambda}{4}$ Phasenschieber gebildet sind, so daß die Vorrichtung völlig frei von irgendwelchen unstabilen Größen ist.

Nach der in Anspruch 4 angegebenen Ausführungsform werden die Nutzspannungen mit Hilfe von zwei Bezugswellenleitern in gleicher Weise zweimal gebildet, jedoch mit dem Unterschied, daß in dem einen Bezugswellenleiter eine solche Phaseneinstellung erfolgt, daß sich die beiden Nutzspannungen in ihrer Phasenlage um 90° unterscheiden. Sie können daher zur Bildung eines Drehfeldes dienen und sind daher in der Lage, einen Vor-/Rückwärtszähler zu steuern.

Die frequenzmäßige Ausführungsform gemäß Anspruch 5 ist optisch besonders einfach, wobei sich die elektrische Schaltung verhältnismäßig einfach gestaltet. Der Grundgedanke der frequenzmäßigen Ausführungsform besteht darin, das verwendete Licht mit einer bestimmten Frequenz zu überlagern und die gesamten Vorgänge des Interferometers auf der Grundlage dieser Frequenz auszuführen, die im Mischer als reine Wechselspannung ohne belastenden Gleichspannungsanteil zur Verfügung steht.

Auch bei dieser frequenzmäßigen alternativen Lösung der der Erfindung zugrundeliegenden Aufgabe lassen sich gemäß der Lehre des Anspruchs 7 zwei um 90° verschobene Ausgangsspannungen bilden, mit denen ein Vor-/Rückwärtszähler steuerbar ist. Die 90°-Verschiebung läßt sich einfach elektrisch im Weg der Modulationsspannung zu einem zweiten Mischer mittels eines einfachen Phasenschiebers durchführen. Dem zweiten Mischer wird dabei ebenso wie dem ersten Mischer die Ausgangsspannung des Interferometers zugeführt, die aus der Modulationsfrequenz und der überlagerten Interferenzfrequenz besteht, die durch eine Änderung des Meßweges herbeigeführt wird.

Anhand der Zeichnung soll die Erfindung an zwei Ausführungsbeispielen näher erläutert werden.

Fig. 1 zeigt ein Ausführungsbeispiel der spannungsmäßigen Alternative der erfindungsgemäßen Lösung und

Fig. 2 zeigt ein Ausführungsbeispiel der frequenzmäßigen Alternative der Erfindung.

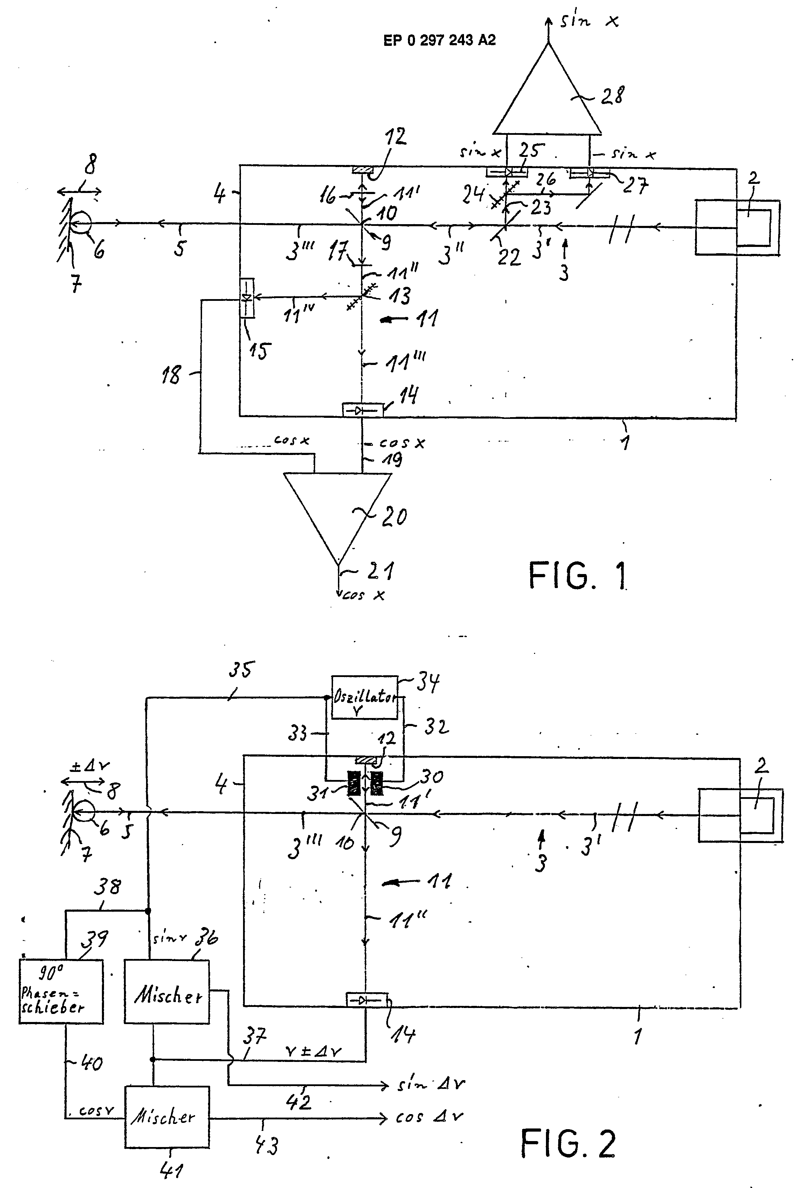

Fig. 1 zeigt eine Platte 1, die in an sich bekannter Weise aus Schichten aus Si, $SiO_2$, $Si_3N_4$ und $SiO_2$ besteht. In der zuletzt genannten Schicht sind mehrere lichtwirksame Elemente und Leiter angeordnet. Seitlich an der Platte 1 ist ein Laser 2 angeordnet, der Licht in die Schicht aus $Si_3N_4$ aussendet. In dieser Schicht befindet sich ein Meßwellenleiter 3, in den der Laser 2 strahlt und der Teilstücke 3$^i$, 3$^{ii}$ und 3$^{iii}$ enthält. Das dem Laser 2 abgewandte Ende des Meßwellenleiters 3$^{iii}$ mündet in einer Kante 4 in der Platte 1, wo das Licht als Strahl 5 austritt und auf einen Meßreflektor 6 trifft, der sich auf einer Meßfläche 7 befindet, deren Abstand von der Kante 4 mit der Vorrichtung gemessen werden soll und somit einen unterschiedlichen Abstand haben kann, der durch einen Doppelpfeil 8 angedeutet ist.

Der Meßwellenleiter 3 ist über einen Strahlteiler 9 im Bereich einer Koppelstelle 10 mit einem Bezugswellenleiter 11 gekoppelt, der in einzelne Abschnitte 11$^I$, 11$^{II}$ und 11$^{III}$ unterteilt ist. Der Abschnitt 11$^I$ führt zu einem Spiegel 12, während zur anderen Seite der Koppelstelle 10 das Teilstück 11$^{II}$ des Bezugswellenleiters 11 zu einem polarisierenden Strahlteiler 13 führt, von wo das Licht einmal in den Teilabschnitt 11$^{III}$ und außerdem in ein weiteres Teilstück 11$^{IV}$ aufgeteilt wird. Das Teilstück 11$^{III}$ führt zu einer Fotodiode 14, während das Teilstück 11$^{IV}$ zu einer Fotodiode 15 führt.

In dem Teilstück 11$^{II}$ des Bezugswellenleiters 11 ist ein Phasenschieber 17 eingeschaltet, der jeweils eine Phasenverschiebung von $\frac{\lambda}{4}$ bewirkt und aus einem kleinen $\frac{\lambda}{4}$ Plättchen gebildet sein kann.

An den Ausgängen der Fotodioden 14 und 15 stehen gleichspannungsbehaftete Interferenzsignale, die sich in ihrer Phasenlage um 180° unterscheiden, was durch die Bezeichnung cos x und -cos x angedeutet ist. Diese Signale gelangen über Leitungen 18 und 19 in einen Differenzverstärker 20, in dem der Gleichanteil herausfällt, so daß an seinem Ausgang ein gleichspannungsfreies Nutzsignal cos x zur Verfügung steht, das im einfachsten Falle ganz einfach einem Zähler zur Zählung der Interferenzspannung zugeführt werden kann.

Bei dem Ausführungsbeispiel gemäß Fig. 1 ist zusätzlich in den Weg des Meßwellenleiters 3 zwischen den Teilstücken 3$^I$ und 3$^{II}$ ein Strahlteiler 22 eingeschaltet, der einen Teil des Lichts aus dem Lichtwellenleiter über einen Lichtwellenleiter 23 und einen polarisierenden Strahlteiler 24 einmal einer Fotodiode 25 und über einen weiteren Lichtwellenleiter 26 einer weiteren Fotodiode 27 zuführt. Die Ausgangssignale der Fotodioden 25 und 27 unterscheiden sich in der Phasenlage um 180°, jedoch gegenüber den Ausgangsspannungen der Fotodioden 14 und 15 um 90°, weil im Weg des Lichts von dem Meßwellenleiter 3 zu den Fotodioden 25 und 27 keine Phasenschieber wie die Phasenschieber 17 angeordnet ist. Die Ausgangssignale der Fotodioden 25 und 27 sind in einen Differenzverstärker 28 eingespeist, an dessen Ausgang ein gleichspannungsfreies Nutzsignal sin x zur Verfügung steht, das aus den zuvor genannten Gründen sich in der Phasenlage um 90° von dem am Ausgang des Differenzverstärkers 20 stehenden Nutzsignals cos x unterscheidet. Mit Hilfe dieser beiden sin x und cos x Signale, die ein Drehfeld bilden können, kann ein in der Zeichnung nicht dargestellter Vor-/Rückwärtszähler gesteuert werden, der die Bewegungen des Meßreflektors 6 von einer Ausgangslage aus in beide Richtungen anzeigt.

Fig. 2 zeigt ein Ausführungsbeispiel für die frequenzmäßige Lösung der der Erfindung zugrundeliegenden Aufgabe. Grundlage ist auch hier wieder ein Interferometer, wie es bei dem Ausführungsbeispiel gemäß Fig. 1 verwendet ist. Übereinstimmende Teile sind mit gleichen Bezugsziffern versehen. Der Teilabschnitt 11$^I$ weist einen Modulator mit Elektroden 30 und 31 auf, die über Leitungen 32 und 33 mit einem Oszillator 34 verbunden sind, der eine Frequenz $\nu$ von 30 bis 50 MHz hat. Diese Frequenz kann aber auch wesentlich höher oder niedriger liegen. Der Oszillator 34 ist über eine Leitung 35 mit dem einen Mischereingang eines Mischers 36 verbunden, dessen anderer Mischereingang über eine Leitung 37 mit der Fotodiode 14 verbunden ist.

Von der Leitung 35 zweigt eine Leitung 38 ab, die zu einem 90°-Phasenschieber 39 führt, der über eine Leitung 40 mit einem weiteren Mischer 41 verbunden ist, an dessen anderen Mischereingang ebenfalls der Ausgang der Fotodiode 14 über die Leitung 37 angeschlossen ist.

Aufgrund der Modulation des Lichts in dem Teilstück 11$^I$ des Bezugswellenleiters 11 erscheint am Ausgang der Fotodiode 14 die Frequenz $\nu$ des Oszillators, so daß über die Leitungen 35 und 37 dem Mischer 36 immer gleichzeitig die Frequenz $\nu$ zugeführt wird, so daß das Mischprodukt null ist und diese Frequenz damit herausfällt.

Licht gelangt auch über den Teilabschnitt 3$^{III}$ des Meßwellenleiters 3 zu dem Meßreflektor 6 und zurück über den Strahlteiler 9 in den Teilabschnitt 11$^{II}$ des Bezugswellenleiters. Dieser Lichtanteil ändert das Ausgangssignal der Fotodiode 14 frequenzmäßig nicht, wenn der Meßreflektor 6 in Ruhe ist. Wird dagegen der Meßreflektor 6 in Richtung des Doppelpfeiles 8 in die eine oder andere Richtung bewegt, so ändert sich aufgrund des Dopplereffekts nicht nur die Lichtfrequenz bzw. die Phasenlage des von dem Meßreflektor 6 reflektierten Lichts, sondern auch die der Modulationsfrequenz $\nu$ in der beim Dopplereffekt bekannten Weise je nach der Bewegungsrichtung um den Betrag + oder - $\Delta\nu$. Die Folge davon ist, daß an dem Ausgang der Fotodiode 14 die Frequenz $\nu \pm \Delta\nu$ erscheint, und da in dem Mischer 36 die Frequenz herausfällt, erscheint an dessen Ausgang auf einer Leitung 42 nur noch die Frequenz $\Delta\nu$ in einer durch die Einrichtung vorgegebenen Phasenlage, was durch sin $\Delta\nu$ gekennzeichnet ist.

Die gleichen Vorgänge spielen sich hinsichtlich des Mischers 41 ab, wobei jedoch die Phasenlage der Wechselspannung mit der Frequenz $\nu$ direkt vom Oszillator 34 her durch den Phasenschieber 39 um 90° verschoben ist, so daß entsprechend auch die Ausgangswechselspannung auf einer Ausgangsleitung 43 des Mischers 41 gegenüber der auf der Ausgangsleitung 42 um 90° verschoben ist, was mit der Angabe cos Δν in der Zeichnung gekennzeichnet ist. Im Ergebnis stehen also an den Ausgangsleitungen 42 und 43 zwei um 90° in der Phase gegeneinander versetzte Wechselspannungen, deren Frequenz der Dopplerfrequenz entspricht, die durch die Bewegung des Meßreflektors 6 bedingt ist. Diese Dopplerfrequenz ist somit unter Berücksichtigung der Frequenz ν ein Maß für die Abstandsänderung des Meßreflektor 6 von der Kante 4. An die Ausgangsleitungen 42 und 43 ist ein Vor-/Rückwärtszähler in nicht dargestellter Weise angeschlossen, der die genannten Abstandsänderungen anzeigt, wobei natürlich eine Eichung jederzeit möglich ist, so daß jeder Abstand zwischen der Meßfläche 7 bzw. dem daran angebrachten Meßreflektor 6 und der Kante 4 als absolute Größe feststellbar ist.

**Ansprüche**

1. Vorrichtung zur Messung des Abstandes zwischen der Vorrichtung und einer Meßfläche,

mit einem optischen Interferometer, das einen Meßwellenleiter aufweist, dessen eines Ende mit einem Laser verbunden und dessen anderes Ende auf einen auf der Meßfläche angeordneten oder mit dieser wirkungsverbundenen optischen Meßreflektor gerichtet ist, der das Licht in den Meßwellenleiter zurückwirft,

mit einem in dem Interferometer vorgesehenen Bezugswellenleiter, der mit dem Meßwellenleiter über eine Koppelstelle gekoppelt ist, an seinem einen Ende einen Spiegel und an seinem anderen Ende einen lichtelektrischen Wandler aufweist, der mit einer Anzeigeeinrichtung zur Anzeige des elektrischen Ausgangssignals des lichtelektrischen Wandlers verbunden ist,
**dadurch gekennzeichnet,** daß der Bezugswellenleiter (11) über einen vorzugsweise polarisierenden Strahlteiler (13) mit einem Abzweigwellenleiter (11$^{IV}$) gekoppelt ist, dessen Ende mit einem weiteren lichtelektrischen Wandler (15) verbunden ist und der eine Phaseneinstelleinrichtung (17) aufweist, daß die Phase des Lichts gegenüber den an dem zweiten Bezugswellenleiter (23) angeschlossenen lichtelektrischen Wandlern (25, 27) um 90° verschoben ist, und daß die Ausgänge der lichtelektrischen Wandler (14, 15) mit einem Differenzverstärker (20) verbunden sind, dessen gleichspannungsfreies Ausgangssignal in die Anzeigeeinrichtung eingespeist ist.

2. Vorrichtung nach Anspruch 1, **dadurch gekennzeichnet,** daß die Phaseneinstelleinrichtung durch zwei Elektroden gebildet ist, die sich zu beiden Seiten des Abzweigwellenleiters (11$^{IV}$) über einen Teil desselben erstrecken und an eine einstellbare Gleichspannung angeschlossen sind.

3. Vorrichtung nach Anspruch 2, **dadurch gekennzeichnet,** daß die Phaseneinstelleinrichtung (17) durch ein $\frac{\lambda}{4}$ Plättchen gebildet ist.

4. Vorrichtung nach Anspruch 1, **dadurch gekennzeichnet,** daß ein zweiter Bezugswellenleiter (23) vorgesehen ist, der genauso wie der erste Bezugswellenleiter (11) ausgebildet und angeschlossen ist, und daß die Ausgänge der Differenzverstärker (20, 28) an einen Vor-/Rückwärtszähler angeschlossen sind.

5. Vorrichtung zur Messung des Abstandes zwischen der Vorrichtung und einer Meßfläche,

mit einem optischen Interferometer, das einen Meßwellenleiter aufweist, dessen eines Ende mit einem Laser verbunden und dessen anderes Ende auf einen auf der Meßfläche angeordneten oder mit dieser wirkungsverbundenen optischen Meßreflektor gerichtet ist, der das Licht in den Meßwellenleiter zurückwirft,

mit einem in dem Interferometer vorgesehenen Bezugswellenleiter, der mit dem Meßwellenleiter über eine Koppelstelle gekoppelt ist, an seinem einen Ende einen Spiegel und an seinem anderen Ende einen lichtelektrischen Wandler aufweist, der mit einer Anzeigeeinrichtung zur Anzeige des elektrischen Ausgangssignals des lichtelektrischen Wandlers verbunden ist,
**dadurch gekennzeichnet,** daß in den Bezugswellenleiter (11) zwischen der Koppelstelle (10) und dem Spiegel (12) ein Phasenmodulator (30, 31) oder ein Freqeunzmodulator eingeschaltet ist, der an einen Oszillator (34) angeschlossen ist, der mit einem Mischer (36) verbunden ist, in den auch das Ausgangssignal des lichtelektrischen Wandlers (14) eingespeist und dessen Ausgang an einen die Anzeigeeinrichtung bildenden Zähler angeschlossen ist.

6. Vorrichtung nach Anspruch 6, **dadurch gekennzeichnet,** daß der Oszillator (34) über einen 90°-Phasenschieber (39) mit einem zweiten Mischer (41) verbunden ist, in den auch das Ausgangssignal des lichtelektrischen Wandlers (14) eingespeist ist, und daß die Ausgänge der beiden Mischer (36, 41) an einen die Anzeigeeinrichtung bildenden Vor-/Rückwärtszähler angeschlossen sind.

FIG. 1

FIG. 2